# EUROPEAN PATENT SPECIFICATION

(11) **EP 0 375 301 B1**
(45) Date of publication and mention of the grant of the patent: **15.06.1994**
(21) Application number: 89313167.2
(22) Date of filing: 15.12.1989
(51) Int. Cl.: A01D 45/02, G05D 1/02

(54) **Row crop harvester guidance system**
Reihenfruchterntemaschinenführungssystem
Machine de récolte de fruits en rangées avec système de guidage

(30) Priority: 22.12.1988 US 288360; 22.12.1988 US 288598
(43) Date of publication of application: 27.06.1990
(73) Proprietor: NEW HOLLAND BELGIUM N.V., B-8210 Zedelgem (BE)
(72) Inventor: Bohman, Carl E., New Holland PA 17557 (US)
(74) Representative: Singleton, Jeffrey

(56) References cited:
- EP-A- 0 136 557
- CH-A- 671 295
- DE-A- 2 943 991
- DE-A- 3 104 779
- DE-C- 767 307
- IBM TECHNICAL DISCLOSURE BULLETIN, vol. 28, no. 4, September 1985 pages 1383,1384

## Description

This invention relates to row crop harvesting machines with guidance systems and more specifically to automatic or assisted guidance systems.

It is a difficult and taxing task manually to steer a multiple row harvesting machine even when the machine is moving along the rows at a modest rate of speed. The row crop separators which guide the crop to the cutting elements of the machine are often obscured by dust, crop material and/or vegetation such that precise manual steering by visual observation is difficult if not impossible. To alleviate this problem, steering control systems have been developed which employ mechanical feelers to determine the position of a standing row crop relative to the row crop separators. While steering control systems with mechanical feelers offer an improvement over guidance by visual observation, these systems have certain disadvantages in that the mechanical feelers are subject to fouling and damage. In addition, because of the environment in which the feelers must operate, they must be serviced frequently to insure that they are mechanically free. US 4295323 discloses one such system. In particular, it discloses a towed harvesting machine, especially for row crop, having a chassis connected pivotally by a tow bar to a tractor and a fluid-responsive motor connected between the tow bar and the chassis or frame which is capable of laterally shifting the frame or chassis, and hence the mouth of the machine for ensuring alignment of the row crop with the mouth. The mouth of the machine can be provided with sensors controlling this motor, which can be a hydraulic cylinder, to assure this alignment.

An object of the present invention is to provide a row crop harvesting machine having a guidance system which employs non-contact sensors for determining the alignment of the machine relative to a standing crop row.

The present invention is defined in the appended claims and provides, in one embodiment, a row crop harvesting machine having a guidance system comprising a transmitter/receptor pair, comprising two energy beam transmitters and two receptors, is mounted on two crop row separators such that, in use, the energy beams transmitted by the transmitters intersect generally midway between the separators. The energy beams are received by the receptors to produce electrical signals. When the harvesting machine is in alignment with the crop row, the crop row is generally midway between the separators and both energy beams are interrupted at the same time by each crop stalk as the harvesting machine moves along the rows. However, if the crop row is not midway between the separators then one energy beam is interrupted before the other one. The output signals from the receptors are processed to develop steering control signals determined from the time of intercept of the two energy beams. The steering control signals may be applied to a steering control mechanism automatically to control the steering of the harvesting machine, or they may be used to drive "right" and "left" indicators for indicating to the operator the direction in which he should steer.

A time comparison circuit may be provided which is responsive to output signals from the beam receptors to produce steering control signals indicating how the harvesting machine must be steered in order to bring it into alignment with the row of crop stalks.

The lower leaves of some stalk crops pass through the energy beams. Where two transmitters transmit intersecting energy beams to two receptors these leaves cause false indications of stalks, and cause the guidance system to fail to sense some stalks. To overcome this problem, multiple transmitter/receptor pairs may be provided, each pair producing intersecting energy beams. The transmitter/receptor pairs are arranged that the intersection points of the beams of all pairs lie in generally a vertical line located generally midway between two crop row separators. This permits discrimination between beam intercepts caused by crop stalks and those caused by leaves or foliage.

It has been found that if the beams transmitted by the transmitters are infra-red energy beams of sufficient intensity, and the receptors are infra-red energy sensors having a desired degree of sensitivity, then a single transmitter/receptor pair may distinguish between crop stalks and leaves. The stalks intercept the beams but the beams "penetrate through", that is, they are sensed by the receptors through the leaves.

The present invention also provides a method and apparatus for discriminating between crop stalks and leaves in a non-contact row crop sensing system of a row crop harvester, the sensing system being of the type having only first and second transmitters for generating intersecting infra-red beams which are sensed by first and second receptors.

In one embodiment there is provided a method of discriminating between stalks and leaves by generating two infra-red energy beams of sufficient intensity to be sensed through leaves but not stalks, the energy beams being transmitted in two paths which intersect in a region generally midway between two crop row separators of a harvesting machine header, and sensing said energy beams with infra-red sensor having a sensitivity sufficient to sense the energy beams after they have passed through a leaf but insufficient to sense the energy beams if the beams are intercepted by a stalk.

Thus, this aspect of the present invention may provide a row crop harvesting machine having a non-contact row crop guidance system comprising a single transmitter/receptor pair, with two infra-red transmitters and receptors mounted on two adjacent crop row separators of a header of the harvesting machine. The transmitters and receptors are positioned on the crop row separators of the harvesting machine header. The transmitters and receptors are positioned on the crop row separators such that the beams transmitted by the transmitters are directed at respective ones of the receptors and the beams intersect at a point generally midway between the crop row separators. The energies of the transmitted beam and the sensitivities of the receptors are such that the receptors may sense the beams through leaves but are incapable of sensing the beams if they are intercepted by a stalk.

The present invention will now be described in greater detail, by way of example, with reference to the accompanying drawings, in which:-
Figure 1 is a top part-sectional view of a harvesting machine header having two energy beam transmitters and two receptors mounted on adjacent crop row separators;
Figure 2 is a schematic diagram of a circuit for developing steering control signals from two crossed energy beams;
Figure 3 is a logic diagram of time comparator and averager circuits of Figure 2;
Figure 4 is a schematic diagram of a circuit for developing steering control signals from generally vertically arranged pairs of energy beam transmitters and receptors;
Figure 5 shows a crop row separator having generally vertically arranged pairs of energy beam transmitters and receptors;
Figure 6 is a schematic diagram of a circuit for developing steering control signals and having a discriminator for discriminating between crop stalks and weeds and,
Figure 7 illustrates a suitable discriminator for discriminating between stalks and weeds.

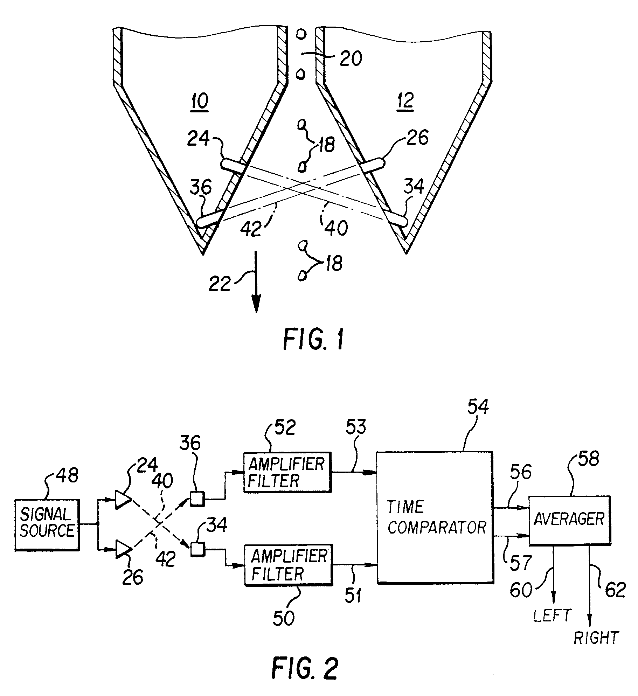

Figure 1 is a sectional top view of two crop row separators 10 and 12 forming part of a header for a harvesting machine. Although only two row separators are shown, it will be understood that the header may have a plurality of row separators like those shown with the header being mounted in front of a harvesting machine (not shown) which may be a combine harvester, a pull-type or self-propelled harvester, or any conventional row crop harvester. The row separators 10 and 12 separate adjacent rows of crop material and direct the stalks 18 of one row into a guideway 20 so that it may be cut by the cutting elements of the harvesting machine as the machine moves in the direction of arrow 22.

In accordance with the principles of the present invention two transmitters 24 and 26 and two receptors 34 and 36 are mounted on the two adjacent row separators 10,12. The row separators 10 and 12 are provided with holes and the transmitters and receptors are mounted on the row separators so that energy beams 40 and 42, transmitted by transmitters 24 and 26, respectively, are received by receptors 34 and 36, respectively. The transmitted energy beams are dimensioned such that they are completely blocked or interrupted by stalks 18 as the harvesting machine moves along the crop row.

The energy beams intersect at a point generally midway between row separators 10 and 12 hence it is evident from Figure 1 that if the guideway 20 of the harvesting machine is aligned with the row of stalks 18 then each stalk will interrupt energy beams 40 and 42 at about the same time as the harvesting machine moves in the direction of arrow 22. On the other hand, if the row separators are too far to the right relative to the row of stalks (looking in the direction of arrow 22) then each stalk will interrupt the energy beam 40 before it interrupts the beam 42. In like manner, if the row separators are too far to the left relative to the row then beam 42 will be interrupted by each stalk before the beam 40 is interrupted.

The circuit of Figure 2 may be utilized to develop steering correction signals in response to interruption of the energy beams 40 and 42. A signal source 48 applies an energising signal to transmitters 24 and 26 to generate the energy beams 40 and 42. In response to energy beam 40, the receptor 34 produces an output signal which is applied through an amplifier and filter circuit 50 to one input of a time comparator 54. The receptor 36 responds to energy beam 42 and produces an output signal which is applied through an amplifier and filter circuit 52 to a second input of time comparator 54. The time comparator 54 determines the time of occurrence of the signal from the amplifier 50 (resulting from interruption of energy beam 40) relative to the time of occurrence of the signal from amplifier 52 (resulting from interruption of the beam 42) and produces one of two steering correction signals 56, 57 depending on which energy beam is interrupted first.

The steering correction signals 56, 57 produced by the time comparator 54 are applied to an averager circuit 58 which averages the signals over a number of stalks to obtain a statistical measure of the correction signals. The averager circuit 58 then produces a "left" or "right" steering control signal on lead 60 or 62. A threshold function may be included in the averager circuit 58 so that it produces no steering control signal if the harvesting machine is properly aligned with the rows, or if there are minor crop displacements. The steering control signal leads 60 and 62 may be connected to the conventional steering control mechanism for the harvesting machine automatically to control steering or they may be connected to visual indicators to indicate to the operator that he should manually steer to the left or to the right.

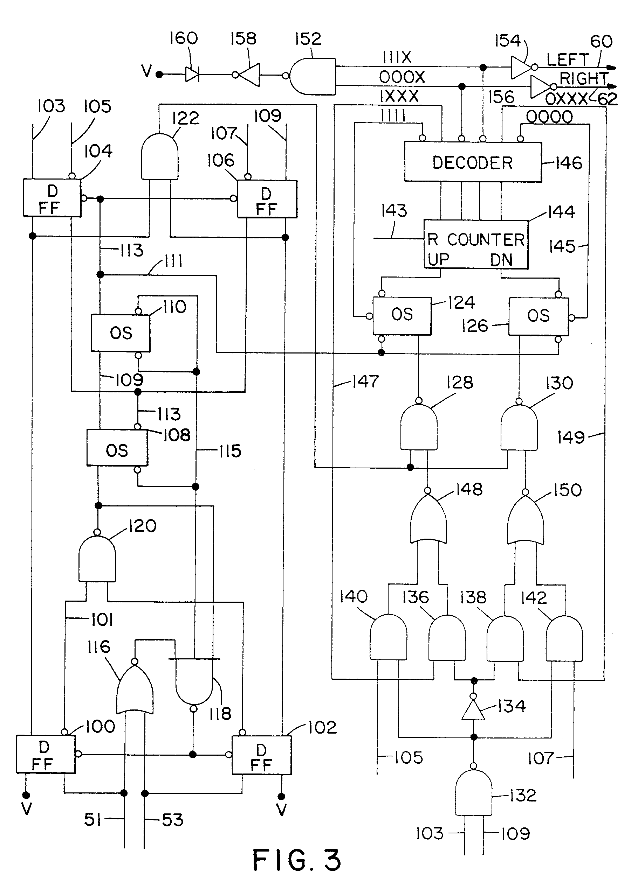

Figure 3 illustrates a logic circuit for performing the functions of time comparator 54 and averager circuit 58. The time comparator circuit 54 includes four D-type flip-flops (FF) 100, 102, 104 and 106 and two one-shot multivibrators (OS) 108 and 110. The outputs of the amplifier and filter circuits 50 and 52 are connected by leads 51 and 53, respectively, to the clocking inputs of flip-flops 100 and 102, respectively. In addition, leads 51 and 53 are connected to a NOR gate 116 and the output of the NOR gate is connected to one input of a NAND gate 118.

One output of FF 100 is connected to the data input of FF 104 and one input of an AND gate 122. One output of FF 102 is connected to the data input of FF 106 and a second input of the AND gate 122. The second outputs of FFs 100 and 102 are connected to a NAND gate 120 the output of which is connected to OS 108 and the NAND gate 118.

OS 108 has one output connected to trigger OS 110 and the second output is connected to the clocking inputs of FFs 104 and 106. OS 110 has one output connected to the reset inputs of FFs 104 and 106 and a second output connected to the NAND gate 118 and OSs 108 and 110.

The purpose of OS 108 is to establish a dead zone interval immediately following interruption of one of the beams 40 or 42 by a stalk. If the other beam is interrupted during the dead zone interval then the circuit treats the two interruptions as if the two beams were interrupted simultaneously. The reason for the dead zone interval is to prevent generation of a steering control signal when slightly misaligned stalks cause one beam to be interrupted just slightly before the other one even though the harvesting machine is so closely aligned with the crop row that no steering adjustment is required. At the end of the dead zone interval, when the OS 108 resets, the output of OS 108 clocks FFs 104 and 106 to store therein the states of FFs 100 and 102, these states being an indication of which beam or beams have been interrupted. Steering control signals are then generated in accordance with the states of FFs 104 and 106.

Consider the case where beam 40 is interrupted first so that the amplifier and filter circuit 50 produces a signal on lead 51. In Figure 3, this signal clocks and sets FF 100 and passes through the NOR gate 116 to inhibit the NAND gate 118. When FF 100 is set, its output on lead 101 inhibits the NAND gate 120. The resulting positive-going output of the NAND gate 120 triggers OS 108 to initiate the dead zone interval. When OS 108 is triggered, it produces a positive-going signal on lead 109 which triggers OS 110. When OS 110 is triggered, the positive signal on lead 111 enables two one shot multivibrators OS 124 and OS 126 to respond to negative-going triggering pulses from two NAND gates 128 and 130, respectively. OS 110 has a timing interval of about 4.7ms which begins at the same time as the dead zone interval. The dead zone interval, which is tolled by OS 108, is typically of the order of 3.7ms. The interval following the end of the dead zone interval and during which OS 110 is still in the set state, defines a gating interval for controlling the incrementing/decrementing of a counter 144 as subsequently explained. At the end of the gating interval, OS 110 resets. This produces a signal on lead 113 to reset FFs 104 and 106 and a signal on lead 115 which acts through the NAND gate 118 to reset FFs 100 and 102.

Assume that beam 42 is interrupted by a stalk and that this interruption occurs during the dead zone interval after interruption of beam 40. The interruption of beam 40 causes the amplifier and filter circuit 52 to produce a signal on lead 53 and in Figure 3, this signal sets FF 102. With FFs 100 and 102 both set, both inputs to the AND gate 122 are enabled and the output of the AND gate 122 enables the two NAND gates 128 and 130. At the end of the dead zone interval, OS 108 resets and the positive-going signal on lead 113 clocks the set states of FFs 100 and 102 into FFs 104 and 106, respectively.

Output leads 103 and 109 from FFs 104 and 106 are connected to a NAND gate 132 which is enabled when both these FFs are set. The output from the NAND gate 132 is inverted at 134 and enables two NAND gates 136 and 138. At the same time, the output of the NAND gate 132 blocks two further NAND gates 140 and 142.

On the other hand, if the second energy beam is not interrupted before the end of the dead zone interval, then at the end of the interval only one of FFs 104 and 106 will be set. In this case only, the NAND gate 132 is blocked and one input of each of the AND gates 140 and 142 is enabled. Thus, depending on whether FF 104 or 106 is set, one of the AND gates 140 or 142 will be fully enabled.

To digress for a moment, a four-stage binary up/down counter 144 is provided which performs the averaging and threshold functions of averager circuit 58. The stages of counter 144 are connected to count in the sequence shown in Table 1.

**TABLE 1**

| **BINARY COUNT** | **DECIMAL EQUIVALENT** | **OUTPUTS FROM DECODER** |
|---|---|---|
| 0000 | 0 | steer right |
| 0001 | 1 | steer right |
| 0010 | 2 | light no-steer indicator 160 |
| 0011 | 3 | light no-steer indicator 160 |
| 0100 | 4 | light no-steer indicator 160 |
| 0101 | 5 | light no-steer indicator 160 |
| 0110 | 6 | light no-steer indicator 160 |
| 0111 | 7 | light no-steer indicator 160 |
| 1000 | 8 | light no-steer indicator 160 |
| 1001 | 9 | light no-steer indicator 160 |
| 1010 | 10 | light no-steer indicator 160 |
| 1011 | 11 | light no-steer indicator 160 |
| 1100 | 12 | light no-steer indicator 160 |
| 1101 | 13 | light no-steer indicator 160 |
| 1110 | 14 | steer left |
| 1111 | 15 | steer left |

Counter 144 is initialised or reset to a count of 8 (1000) by a signal on lead 143 when power is turned on, or a reset switch (not shown) is depressed. Each negative-going pulse applied to the counter 144 at its UP input increases the count in the counter and each negative-going pulse applied to the DN (Down) input decrements the count in the counter. The outputs of the counter are connected to a decoder 146. Decoder 146 produces a signal on lead 145 when the count in the counter is 0000. This signal is applied to the inhibit input of OS 126 and prevents OS 126 from producing output pulses to decrement the counter. This prevents counter wrap-around from 0 to 15. In like manner, decoder 146 produces a signal on lead 147 which is connected to the inhibit input of OS 124 to prevent OS 124 from producing an output pulse which would increment the counter from 15 to 0.

When the counter 144 contains a count of 14 or 15, the decoder 146 produces the signal 111X which is applied to a NAND gate 152 and an inverter 154. When the counter contains a count of 0 or 1, the decoder produces the signal OOOX which is applied to the NAND gate 152 and an inverter 156. The outputs of inverters 154 and 156 are the "left" and "right" steering control signals on leads 60 and 62, respectively.

When the counter 144 contains a count from 2 to 13, both inputs to the NAND 152 gate are false (high) and the NAND gate produces an output through an inverter 158 to energise a visual indicator 160 to indicate that the harvesting machine is properly aligned with the crop row.

When the counter 144 contains a count of from 8 to 15, decoder 146 produces an output signal on lead 147 to enable one input of the AND gate 136 and when the counter contains a count of from 0 to 7, the decoder 146 produces an output signal on lead 149 to enable one input of the AND gate 138.

The counter 144 may or may not be incremented or decremented at the end of the dead zone interval, depending on which of the energy beams 40 and 42 have been interrupted, and the count in the counter.

Assume that both energy beams are interrupted before the end of the dead zone interval established by OS 108. As soon as the second beam is interrupted to set FF 100 or 102, the output of the AND gate 122 enables the NAND gates 128 and 130. Prior to the end of the dead zone interval, the FFs 104 and 106 will both be in the reset state, hence the output of the NAND gate 132 enables the ANDs 140 and 142 while the output of inverter 134 blocks AND gates 136 and 138. The outputs 105 and 107 from FFs 104 and 106 enable the AND gates 140 and 142 and they produce output signals which pass through the NOR gates 148 and 150 to block the NAND gates 128 and 130.

At the end of the dead zone interval, FFs 104 and 106 are both set so that the NAND gate 132 blocks the AND gates 140 and 142 while the output of inverter 134 enables the AND gates 136 and 138. If the count in counter 144 is between 0 and 7, the signal on lead 149 enables the AND gate 138 and the output of the NOR gate 150 continues to block the NAND gate 130 so that OS 126 does not decrement the counter. At the same time, the signal on lead 147 blocks the AND gate 136 and the AND gate produces an output signal which passes through the NOR gate 148 and the NAND gate 128 to trigger OS 124. The output from OS 124 increments the count in the counter 144.

If the count in the counter 144 is between 8 and 15, and both energy beams 40, 42 are interrupted before the end of the dead zone interval then, at the end of the dead zone interval, the AND gate 136 will be enabled and the AND gate 138 will be blocked by the signal on lead 149. The output of the AND gate 136 acts through the NOR gate 148 to block the NAND gate 128, thereby preventing the triggering of OS 124. At the same time, with the AND gate 138 blocked, the output of the NOR gate 150 enables the NAND gate 130 and the negative-going output of the NAND gate 130 triggers OS 126 whose output decrements the count in the counter 144.

To summarize, if both energy beams 40, 42 are interrupted before the end of the dead zone interval, the count in the counter 144 is incremented if the count is less than 8 but decremented if the count is greater than 7. Thus, as long as the harvesting machine is aligned with the crop row, the counter 144 will reduce any misalignment count accumulated in the counter. That is, it averages the number of input signals 51, 53.

Assume that only beam 40 is interrupted during the dead zone interval with the other beam being interrupted after the dead zone interval. In this case, only FF 104 is set at the end of the dead zone interval. The output of the NAND gate 132 enables the AND gates 140 and 142 while the output of inverter 134 blocks the AND gates 136 and 138. With FF 104 set, the signal on lead 105 blocks the AND gate 140. With both the AND gates 136 and 140 blocked, the NOR gate 148 enables the NAND gate 128 and if the count in the counter 144 is not 1111, the output of the NAND 128 triggers OS 124 to increment the count in counter 144. If the incremented count is 14 or 15, the counter produces the signal 111X which is inverted at 154 to become the "left" steering control signal on lead 60.

If energy beam 42 is interrupted during the dead zone interval with beam 40 being interrupted after the dead zone interval, then only FF 106 is set at the end of the dead zone interval. Again, the output of the NAND gate 132 enables the AND gates 140 and 142, while the output of inverter 134 blocks the AND gates 136 and 138. With FF 104 reset, its output signal on lead 105 passes through the AND gate 142 and the NOR gate 148 to block the NAND gate 128 and prevent OS 126 from incrementing the counter 144. Since FF 106 is set, the signal it produces on lead 107 blocks the AND gate 142. With the AND gates 138 and 142 blocked, the NOR gate 150 produces an output signal which passes through the NAND gate 130 to trigger OS 126 if the count in counter 144 is not 0000. The output of OS 126 decrements the count in the counter 144 and if the decremented count is 0 or 1 decoder 146 produces the signal 000X which is inverted at 156 to become the "right" steering control signal on lead 62.

If both energy beams 40, 42 are not interrupted before the end of the gating interval, that is by the time OS 110 resets, then the counter 144 is neither incremented or decremented. Unless both energy beams 40, 42 are broken, the AND gate 122 remains blocked and the output of the AND gate 122 blocks the NAND gates 128 and 130 so that no negative-going pulses can be produced to trigger OS 124 or OS 126 to thereby increment or decrement the counter 144.

The energy beams 40 and 42 may be of practically any type such as, for example, sonic, subsonic, ultrasonic, visible light, or infra-red. the principal advantage of using acoustic beams is their ability to function in the presence of dust and dirt in the region of the sensors and receptors. However, sonic beams have certain disadvantages in that the sound energy may penetrate the standing crop to some extent, and may bend around the crop stalks thus making discrimination of the receptor signal difficult. Ultrasonic beams do not suffer these disadvantages and thus are preferable to sonic beams. Both sonic and ultrasonic beams have the disadvantage that noise generated by the harvesting machine may occasionally cause interference but this disadvantage may be overcome by properly filtering the output signals from the sensors.

A visible light beam has the advantage that it is discernible thus making it easier to trouble shoot problems. However, visible light sensors are subject to interference from sunlight and other external sources. The problem may be overcome by modulating the light beams in which case the signal source 48 will include a suitable modulator. Alternatively, modulated or unmodulated infra-red beams may be employed.

Regardless of the type of energy beams employed, the embodiment of Figures 1 and 2 may not provide the desired preciseness of control when harvesting crops with leaves low on the stalks. These lower leaves interrupt the energy beams at the stalk, as do the stalks, thus resulting in momentary erroneous guidance control signals. Since statistically there should be as many leaves on one side of a row of stalks as there are on the other, beam interruptions by lower leaves should average to zero over a period of time. Additional electronic signal processing might be used to reduce the effect of lower leaves but additional electronic averaging compromises the accuracy and response time of the circuit.

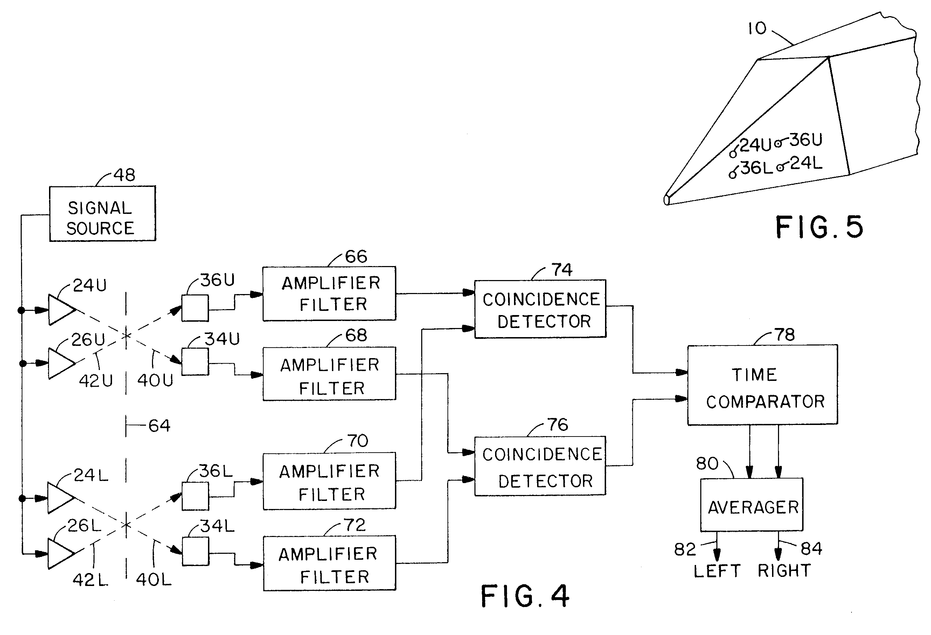

Figures 4 and 5 illustrate an embodiment of the invention capable of discriminating between leaves and stalks. In most cases the stalks are generally vertical while the lower leaves are not vertical but slant off from the sides of the stalk at an angle. To discriminate between vertical stalks and slanted leaves, two or more transmitter/receptor pairs are provided, each transmitter/receptor pair being arranged to produce intersecting energy beams as illustrated in Figure 1. Figure 4 shows a first or upper transmitter/receptor pair comprising transmitters 24U and 26U and receptors 34U and 36U, and a second or lower transmitter/receptor pair comprising transmitters 24L and 26L and receptors 34L and 36L. Figure 5 shows one transmitter and one receptor of each pair on one crop row separator 10. The transmitters and receptors of a pair are positioned on the crop row separators so that the energy beams intersect generally midway between the dividers 10,12. In addition, the points of intersection of the beams of each pair lie on a generally vertical line 64 which is generally coplanar with the stalks of a row when the harvesting machine is properly aligned with the rows.

The outputs of the receptors 36U, 34U, 36L and 34L are connected to amplifier and filter circuits 66, 68, 70 and 72, respectively. The outputs of the amplifier and filter circuits 66 and 70 are connected to a first coincidence detector 74 and the outputs of the amplifier and filter circuits 68 and 72 are connected as inputs to a second coincidence detector 76.

The circuit of Figure 4 operates as follows. If the harvesting machine is properly aligned with a row of stalks, then each stalk will interrupt light beams 40U, 42U, 40L and 42L substantially simultaneously and all of the amplifier and filter circuits produce an output signal to the coincidence detectors 74 and 76. As a result, the coincidence detectors 74,76 simultaneously produce two output signals to a time comparator circuit 78.

If the harvesting machine is too far to the right relative to the row of stalks 18 (as viewed in the direction of arrow 22), then the beams 40U and 40L are interrupted simultaneously by each stalk, this interruption occurring before beams 42U and 42L are simultaneously interrupted. When beams 40U and 40L are interrupted, the amplifier and filter circuits 68 and 72 produce output signals to the coincidence detector 76 and the coincidence detector applies a signal to the time comparator 78. Subsequently, when beams 42U and 42L are interrupted, the amplifier and filter circuits 66 and 70 produce output signals to the coincidence detector 74 and the coincidence detector applies a signal to the time comparator 78. The time comparator 78 then produces a correction signal which is dependent on the interval of time between the signals from coincidence detectors 76 and 74. The correction signal is averaged by an averager circuit 80 to produce a steering control signal on lead 82. The steering control signal may be applied to the steering mechanism automatically to steer the harvesting machine to the right, or it may be applied to a visual indicator to indicate to the operator that he should steer to the right. The time comparator 78 and averager circuit 80 may comprise a digital logic circuit as shown in Figure 3.

If the harvesting machine is too far to the left relative to the row of stalks 18 (as viewed in the direction of arrow 22), then the beams 42U and 42L are interrupted simultaneously by each stalk, this interruption occurring before the beams 40U and 40L are simultaneously interrupted. In this case, the amplifier and filter circuits 66 and 70 first produce output signals to cause the coincidence detector 74 to apply a signal to the time comparator 78. Subsequently, when beams 40U and 40L are interrupted, the amplifier and filter circuits 68 and 72 cause coincidence detector 76 to produce an output signal to the time comparator. The time comparator determines the difference in time between the output signals from the coincidence detectors 76 and 74 and produces a correction signal to the averager 80 which causes the averager to produce a "right" steering control signal on lead 84.

A lower leaf, because of its angle of slant, will not interrupt beams 40U and 40L simultaneously, hence the outputs from the amplifier and filter circuits 68 and 72 will not be coincident, and the coincidence detector 76 will not produce an output signal when a leaf is encountered. In like manner, a lower leaf will not interrupt beams 42U and 42L simultaneously, hence the outputs from the amplifier and filter circuits 66 and 70 will not be coincident, and the coincidence detector 74 will not produce an output signal. Thus, the circuit of Figure 4 in effect ignores interruptions of the energy beams by leaves but responds to interruptions of the beams by stalks, thereby to provide steering control signals.

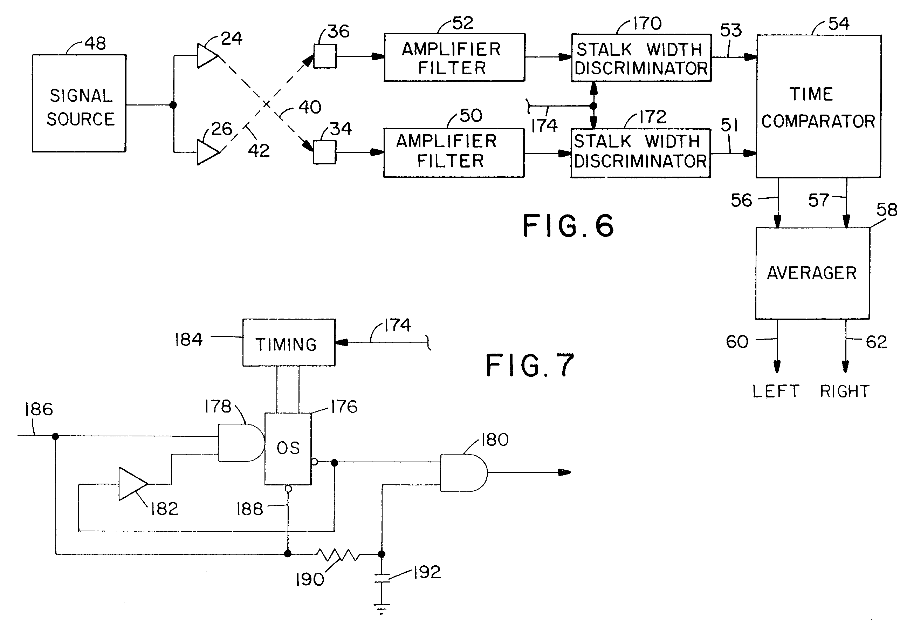

If thin stalked weeds should be present along the row of crop stalks being sensed, then the circuit of Figure 2 may respond to the weed stalks and miss some of the crop stalks thus compromising the accuracy and the response time. Figure 6 illustrates a non-contact guidance system having discriminators for discriminating between beam receptor output signals resulting from beam interruptions caused by crop stalks and those caused by weed stalks. The guidance system of Figure 6 differs from that shown in Figure 2 only by the addition of a stalk width discriminator circuit for each signal applied to the time comparator 54. Weeds generally have stalks of much smaller diameter than crop stalks, such as corn. Since the time of interruption of an energy beam is related to the size of the stalk which interrupts it, and since the duration of the receptor output signal is equal to the duration of the energy beam interruption, it is possible to discriminate between crop stalks and weed stalks, and block the receptor output signal if it results from an interruption by a weed stalk. In Figure 6, stalk width discriminators 170 and 172 are provided for discriminating between weed stalks and crop stalks. The stalk width discriminator 170 is connected between the output amplifier and filter circuit 52 and one input of time comparator 54, while the stalk width discriminator 172 is connected between amplifier and filter circuit 50 and the second input to time comparator 54. The stalk width discriminator 170 operates to block from the time comparator 54 signals produced by the energy beam receptor 36 and resulting from interruptions of the energy beam 42 by weeds or stalks of less than some preselected diameter. In like manner, the stalk width discriminator 172 operates to block from the time comparator 54 signals produced by the energy beam receptor 34 and resulting from interruption of the energy beam 40 by weeds or stalks of less than a preselected diameter.

Figure 7 illustrates a circuit suitable for use as the stalk width discriminators 170 and 172. The circuit comprises a one-shot multivibrator 176, two AND gates 178 and 180, an amplifier 182 and a timing circuit 184 for timing the duration of the output signal from OS 176 when it is triggered.

In its rest state, OS 176 produces an output signal which enables one input of the AND gate 180 and acts through the amplifier 182 to enable one input of the AND gate 178. When an energy beam is interrupted, a positive-going signal appears on lead 186 having a duration equal to the time the beam is interrupted. The signal on lead 186 passes through the AND gate 178 immediately to trigger OS 176 and block the AND gate 180. The signal on lead 186 is delayed by the combination of a resistor 190 and a capacitor 192 so that the signal arrives at the input to the AND gate 180 after OS 176 has changed and blocks the second input of the AND gate. If the signal on lead 186 is produced as a result of sensing a relatively small weed stalk, it will end before OS 176 times out, thus blocking the AND gates 178 and 180. Accordingly, no output signal is produced by the AND gate 180.

On the other hand, if the signal on lead 186 is produced as a result of sensing a relatively large crop stalk, the OS 176 times out while the signal 186 is still present. When OS 176 times out, it enables the AND gate 180 which then produces an output pulse which may be applied to the time comparator 54.

The timing circuit 184 determines the duration of the output pulse from OS 176 for blocking the AND gate 180. The timing circuit 184 may be made adjustable to provide for various crop stalk and weed stalk sizes. In a typical application, the timing circuit 184 may be adjusted so that the duration of the output pulse from OS 176 is approximately equal to the length of time that an energy beam is interrupted by a 5/8" (16mm) corn stalk. It will be recognised that the time of interruption of an energy beam is not only dependent on the size of the stalk causing the interruption but also dependent upon the ground speed of the harvesting machine. Therefore, a signal proportional to the harvesting machine ground speed may be applied to the timing circuit 184 over a lead 174 so that the duration of the blocking pulse produced by OS 176 becomes shorter as the ground speed increases.

The embodiment of Figures 4 and 5 provides one arrangement for discriminating between leaves and stalks but requires at least four energy beam transmitters and four receptors. It has been found that if the transmitters 24 and 26 are infra-red energy beam transmitters the intensity of the beams is raised sufficiently, the beams are concentrated, and the receptors 34 and 36 are sufficiently sensitive, then the transmitted energy beams will "penetrate through" leaves but not crop stalks. That is, the receptors can sense the transmitted energy beams through leaves but cannot sense the energy beams through crop stalks.

The type SM31EL emitters and type SM31RL receptors commercially available from Banner Engineering Corporation are suitable for use as the energy beam transmitters and receptors, respectively. These devices are described in the specification bulletin entitled MINI-BEAM SM31EL/RL Self-Contained DC Opposed Mode Sensor Pair published by Banner Engineering Corporation. The transmitters produce an effective beam size of about 3/8" and the receptors have a millisecond response time.

Thus it is seen that this embodiment of the present invention provides a method and apparatus for discriminating between leaves and stalks in a harvesting machine having a guidance system, said method and apparatus requiring only two infra-red energy beam transmitters and two infra-red energy beam receptors.

## Claims

1. A row crop harvesting machine having at least first and second crop row separators (10,12) adapted to move along opposite sides of a crop row of stalks (18), and having a guidance system characterised in that the guidance system comprises
first and second transmitters (24,26) for transmitting first and second energy beams (40,42), respectively;
first and second energy beam receptors (34,36);
the transmitters and receptors being mounted on the first and second row separators (10,12) such that the first energy beam (40) is received by the first receptor (34), and said second energy beam (42) is received by the second receptor (36), and the first and second energy beams (40,42) have intersecting paths which cross a crop row so that the energy beams are interrupted by the stalks (18), the region of intersection of the energy beams defining the lateral position of the harvesting machine relative to the crop row; and
means (50-62) responsive to the first and second receptors (34,36) for producing steering control signals indicating the direction in which the harvesting machine must be steered in order to align the harvesting machine along the crop row.

2. A machine as claimed in claim 1, characterised in that the means for producing steering control signals comprises means (74,76) for determining the sequence in which the energy beams (40,42) are interrupted by a stalk (18) in the crop row.

3. A machine as claimed in claim 1 or 2, characterised in that the first and second energy beams cross at a point generally midway between the row separators (10,12).

4. A machine as claimed in any of the preceding claims, characterised in that the energy beams (40,42) are acoustic energy beams.

5. A machine as claimed in any of claims 1 to 3, characterised in that the energy beams (40,42) are infra-red beams.

6. A machine as claimed in any of claims 1 to 3, characterised in that the energy beams (40,42) are visible light beams.

7. A machine as claimed in any of the preceding claims, characterised in that modulating means are operable to apply a modulated signal to each of the transmitters (24,26) for producing modulated energy beams (40,42).

8. A machine as claimed in claim 2 and any of claims 3 to 7 appended thereto, characterised in that the means for determining the sequence in which said energy beams are interrupted comprises:
a first flip-flop (100) responsive to the first energy beam receptor (34) for storing an indication when the first energy beam (40) is interrupted by a given stalk;
a second flip-flop (102) responsive to the second energy beam receptor (36) for storing an indication when the second energy beam (42) is interrupted by said given stalk;
means (108) responsive to said first and second flip-flops for initiating and timing a dead zone interval;
third and fourth flip-flops (104,106) connected to the first and second flip-flops (100,102), respectively, and to said means (108) for initiating and timing a dead zone interval, the means (108) for initiating and timing a dead zone interval producing an output signal which clocks the indications stored in the first and second flip-flops into the third and fourth flip-flops, respectively, at the end of the dead zone interval.

9. A machine as claimed in claim 8, characterised in that the means for producing steering control signals includes:
an up-down counter (144); and
logic circuit means including first means (122) responsive to the third and fourth flip-flops (104,106) for incrementing the counter (144) when the first flip-flop (100), but not said second flip-flop (102), is set before the end of the dead zone interval, the logic circuit means including second means (120) responsive to the third and fourth flip-flops (102,104), for decrementing the counter when the second flip-flop (102), but not the first flip-flop (100), is set before the end of the dead zone interval.

10. A machine as claimed in claim 9, characterised in that the means for producing steering control signals includes decoder means (146) for producing a first steering control signal when the counter (144) contains a count greater than a first value, and a second steering control signal when the counter contains a count less than a second value.

11. A machine as claimed in claim 10, characterised in that it further comprises means for resetting the counter (144) to an intermediate value which is less than said first value and greater than said second value, the logic circuit means including third means (132,136,140) responsive to the third and fourth flip-flops (104,106) for incrementing the counter (144) when the counter contains a count less than said intermediate value and both the first and second flip-flops (100,102) are set during the dead zone interval, and fourth means (132,138,142) responsive to the third and fourth flip-flops (104,106) for decrementing the counter when the counter contains a count greater than said intermediate value and both the first and second flip-flops are set during the dead zone interval.

12. A machine as claimed in claim 11, characterised in that it further comprises first and second indicators responsive to said first and second steering control signals, respectively.

13. A machine as claimed in claim 12, characterised in that it further comprises a third indicator (160) for indicating to an operator that he is steering along a row, the decoder means (146) including means for energising the third indicator when the count in the counter (144) is equal to, or less than, said first value and equal to, or greater than, said second value.

14. A machine as claimed in any of the preceding claims, characterised in that it further comprises:
third and fourth transmitters (24U,26U) for transmitting third and fourth energy beams (40U,42U), respectively;
third and fourth energy beam receptors (34U, 36U);
the third and fourth transmitters and receptors being mounted on the first and second row separators (10,12) above the first and second transmitters (24L,26L) and receptors (34L,36L), the third and fourth transmitters and receptors being mounted such that the third energy beam (40U) is received by the third receptor (34U), and the fourth energy beam (42U) is received by the fourth receptor (36U), the third and fourth energy beams having intersecting paths with the point of intersection being in a generally vertical line (64) above the point at which the first and second energy beams (40L,42L) intersect;
the means for producing steering control signals including means (66-80) responsive to the third and fourth receptors as well as to the first and second receptors for producing the steering control signals.

15. A machine as claimed in claim 14, characterised in that the means for producing steering control signals includes first and second coincidence detection means (76,74) responsive to the first and third (34L,34U), and the second and fourth (36L,36U) receptors, respectively, for producing the steering control signals when the first and third energy beams (40L,40U) are concurrently interrupted, or when the second and fourth energy beams (42L,42U) are concurrently interrupted.

16. A machine as claimed in claim 15, characterised in that the means (78) for producing steering control signals includes means responsive to the first and second coincidence detection means (76,74) for producing a first steering control signal when the first and third energy beams (40L,40U) are interrupted before the second and fourth energy beams (42L,42U), and producing a second steering control signal when the second and fourth energy beams are interrupted before the first and second energy beams.

17. A machine as claimed in claim 16, characterised in that it further comprises an averager circuit (80) responsive to the first and second steering control signals for averaging the first and second steering control signals.

18. A machine as claimed in claim 17, characterised in that it further comprises indicator means responsive to the averager circuit (80).

19. A machine as claimed in any of claims 1 to 13, characterised in that it further comprises stalk width discriminator means (170,172) connected between each of the receptors and said means for producing steering control signals.

20. A machine as claimed in claim 19, characterised in that each stalk width discriminator means (170,172) includes a one-shot multivibrator (176) responsive to a receptor for producing a pulse output, logic circuit means (178,180) responsive to a receptor and the pulse for applying a signal to the means for producing steering control signals; and means (174,184) for varying the duration of the pulse in accordance with the ground speed of the harvesting machine.

21. A method of guiding a row crop harvesting machine, characterised in that the method comprises:
providing first and second infra-red energy beam receptors (34,36), producing output signals, and first and second energy beam transmitters (24,26) on the harvesting machine and positioned on the harvesting machine so that infra-red energy beams transmitted by the first and second transmitters are directed towards the first and second receptors, respectively, and the first and second beams intersect at a crop row of the row crop when the harvesting machine is aligned with the crop row; and,
energising (48) the transmitters to generate first and second infra-red energy beams (40,42) of sufficient power such that the beams may be sensed by the respective receptors after passing through a leaf but are blocked from the respective receptors by crop stalks as the harvesting machine moves along the crop row.

22. A method as claimed in claim 21, characterised in that it further comprises the step of allowing the first and second infra-red energy beam receptors (34,36) to produce output signals only when the first and second infra-red energy beams (40,42), respectively are blocked by crop stalks.

23. A method as claimed in claims 21 or 22, characterised in that it comprises the step of analysing (54,58) the output signals produced by the first and second infra-red energy beam receptors (34,36) and producing steering control signals (60,62) for guiding the harvesting machine along the crop row.

24. A row crop harvesting machine adapted to move along a row of crop stalks and having a guidance system characterised in that the guidance system comprises:
first and second infra-red energy beam transmitters (24,26) for producing first and second infra-red energy beams (40,42) which cross a crop row and intersect at a crop row when the harvesting machine is aligned with the crop row;
first and second infra-red energy beam receptors (34,36) for sensing the first and second infra-red energy beams, respectively; and
means (48) for energising the first and second energy beam transmitters to produce the first and second energy beams with sufficient intensity that the first and second infra-red energy beam receptors sense the first and second energy infra-red energy beams through leaves but not through crop stalks, whereby the first and second infra-red energy beam receptors produce output signals only when the first and second infra-red energy beams, respectively, are blocked by crop stalks.

25. A machine as claimed in claim 24, characterised in that it further comprises means (54,58) for analysing the output signals produced by the first and second infra-red energy beams receptors (34,36) and producing steering control signals (60,62) for guiding the harvesting machine along the crop row.

26. A machine as claimed in claim 25, characterised in that the analysing means comprises a time comparator to which the output signals from the receptors (34,36) are applied, and averaging means coupled to the output of the time comparator.

27. A method of guiding a row crop harvesting machine, characterised in that the method comprises:
providing first and second infra-red energy beam receptors (34,36) and first and second energy beam transmitters (24,26) on the harvesting machine and positioned on the harvesting machine so that infra-red energy beams transmitted by the first and second transmitters are directed towards the first and second receptors, respectively, and the first and second beams intersect at a crop row of the row crop when the harvesting machine is aligned with the crop row; and,
energising (48) the transmitters to generate first and second infra-red energy beams (40,42) of sufficient power such that the beams may be sensed by the respective receptors after passing through a leaf but are blocked from the respective receptors by crop stalks as the harvesting machine moves along the crop row.

## Patentansprüche

1. Reihenfrucht-Erntemaschine mit zumindestens ersten und zweiten Fruchtreihen-Teilern (10,12), die zur Bewegung entlang entgegengesetzter Seiten einer Fruchtreihe von Stengeln (18) ausgebildet sind, und mit einem Führungssystem,
dadurch gekennzeichnet, daß das Führungssystem folgende Teile umfaßt:
erste und zweite Sender (24,26) zur Aussendung erster bzw. zweiter Energiestrahlen (40,42),
erste und zweite Energiestrahl-Empfänger (34,36),
wobei die Sender und Empfänger auf den ersten und zweiten Reihenteilern (10,12) derart befestigt sind, daß der erste Energiestrahl (40) von dem ersten Empfänger (34) empfangen wird, während der zweite Energiestrahl (42) von dem zweiten Empfänger (36) empfangen wird, und wobei die ersten und zweiten Energiestrahlen (40,42) sich schneidende Pfade aufweisen, die eine Fruchtreihe derart überqueren, daß die Energiestrahlen durch die Stengel (18) unterbrochen werden, wobei der Schnittbereich der Energiestrahlen die seitliche Position der Erntemaschine bezüglich der Fruchtreihe definiert, und
auf die ersten und zweiten Empfänger (34,36) ansprechende Einrichtungen (50-62) zur Erzeugung von Lenkungs-Steuersignalen, die die Richtung anzeigen, in die die Erntemaschine gelenkt werden muß, um die Erntemaschine entlang der Fruchtreihe auszurichten.

2. Maschine nach Anspruch 1,
dadurch gekennzeichnet, daß die Einrichtungen zur Erzeugung der Lenkungs-Steuersignale Einrichtungen (74,76) zur Feststellung der Folge umfassen, in der die Energiestrahlen (40,42) durch einen Stengel (18) in der Fruchtreihe unterbrochen werden.

3. Maschine nach Anspruch 1 oder 2,
dadurch gekennzeichnet, daß die ersten und zweiten Energiestrahlen einander an einem Punkt allgemein in der Mitte zwischen den Reihenteilern (10,12) kreuzen.

4. Maschine nach einem der vorhergehenden Ansprüche,
dadurch gekennzeichnet, daß die Energiestrahlen (40,42) Schallenergiestrahlen sind.

5. Maschine nach einem der Ansprüche 1 bis 3,
dadurch gekennzeichnet, daß die Energiestrahlen (40,42) Infrarotstrahlen sind.

6. Maschine nach einem der Ansprüche 1 bis 3,
dadurch gekennzeichnet, daß die Energiestrahlen (40,42) im sichtbaren Bereich liegende Lichtstrahlen sind.

7. Maschine nach einem der vorhergehenden Ansprüche,
dadurch gekennzeichnet, daß Modulationseinrichtungen zum Zuführen eines modulierten Signals an jeden der Sender (24,26) zur Erzeugung modulierter Energiestrahlen (40,42) betreibbar sind.

8. Maschine nach Ansprch 2 und einem der hierauf zurückbezogenen Ansprüche 3 bis 7,
dadurch gekennzeichnet, daß die Einrichtungen zur Bestimmung der Folge, in der die Energiestrahlen unterbrochen werden, folgende Teile umfassen:
eine erste Flip-Flop-Schaltung (100), die auf den ersten Energiestrahl-Empfänger (34) anspricht, um eine Anzeige zu speichern, wenn der erste Energiestrahl (40) durch einen vorgegebenen Stengel unterbrochen wird,
eine zweite Flip-Flop-Schaltung (102), die auf den zweiten Energiestrahl-Empfänger (36) anspricht, um eine Anzeige zu speichern, wenn der zweite Energiestrahl (42) durch den vorgegebenen Stengel unterbrochen wird,
auf die ersten und zweiten Flip-Flop-Schaltungen ansprechende Einrichtungen (108) zur Einleitung und Zeitsteuerung eines Totbereichs-Intervalls,
dritte und vierte Flip-Flop-Schaltungen (104,106), die mit der ersten bzw. zweiten Flip-Flop-Schaltung (100,102) und mit den Einrichtungen (108) zur Einleitung und Zeitsteuerung eines Totbereichs-Intervalls verbunden sind, wobei die Einrichtungen (108) zur Einleitung und Zeitsteuerung eines Totbereichs-Intervalls ein Ausgangssignal erzeugen, das die in den ersten und zweiten Flip-Flop-Schaltungen gespeicherten Anzeigen in die dritten bzw. vierten Flip-Flop-Schaltungen am Ende des Totbereichs-Intervalls taktgesteuert einleitet.

9. Maschine nach Anspruch 8,
dadurch gekennzeichnet, daß die Einrichtungen zur Erzeugung der Lenkungs-Steuersignale folgende Teile einschließen:
einen Aufwärts-/Abwärtszähler (144), und
Logikschaltungseinrichtungen, die erste Einrichtungen (122) einschließen, die auf die dritten und vierten Flip-Flop-Schaltungen (104,106) ansprechen, um die Zählung des Zählers (144) zu vergrößern, wenn die erste Flip-Flop-Schaltung (100), nicht jedoch die zweite Flip-Flop-Schaltung (102) vor dem Ende des Totbereichs-Intervalls gesetzt wird, wobei die Logikschaltungseinrichtungen zweite Einrichtungen (120) einschließen, die auf die dritten und vierten Flip-Flop-Schaltungen (102,104) ansprechen, um die Zählung des Zählers zu verringern, wenn die zweite Flip-Flop-Schaltung (102), nicht jedoch die erste Flip-Flop-Schaltung (100) vor dem Ende des Totbereichs-Intervalls gesetzt wird.

10. Maschine nach Anspruch 9,
dadurch gekennzeichnet, daß die Einrichtungen zur Erzeugung von Lenkungs-Steuersignalen Decodiereinrichtungen (146) zur Erzeugung eines ersten Lenkungs-Steuersignals, wenn der Zähler (144) eine Zählung größer als ein erster Wert enthält, und eines zweiten Lenkungs-Steuersignals einschließt, wenn der Zähler eine Zählung kleiner als ein zweiter Wert enthält.

11. Maschine nach Anspruch 10,
dadurch gekennzeichnet, daß sie weiterhin Einrichtungen zur Rücksetzen des Zählers (144) auf einen Zwischenwert einschließt, der kleiner als der erste Wert und größer als der zweite Wert ist, wobei die Logikschaltungseinrichtungen dritte Einrichtungen (132,136,140), die auf die dritten und vierten Flip-Flop-Schaltungen (104,106) ansprechen, um die Zählung des Zählers (144) zu vergrößern, wenn der Zähler eine Zählung kleiner als der Zwischenwert enthält und die ersten und zweiten Flip-Flop-Schaltungen (100,102) während des Totbereichsintervalls beide gesetzt wurden, und vierte Einrichtungen (132,138,142) einschließen, die auf die dritten und vierten Flip-Flop-Schaltungen (104,106) ansprechen, um den Zählerstand des Zählers zu verringern, wenn der Zähler eine Zählung größer als der mittlere Wert enthält und die ersten und zweiten Flip-Flop-Schaltungen beide während des Totbereichs-Intervalls gesetzt wurden.

12. Maschine nach Anspruch 11,
dadurch gekennzeichnet, daß sie weiterhin erste und zweite Anzeiger umfaßt, die auf das erste bzw. zweite Lenkungs-Steuersignal ansprechen.

13. Maschine nach Anspruch 12,
dadurch gekennzeichnet, daß sie weiterhin einen dritten Anzeiger (160) umfaßt, um einer Bedienungsperson anzuzeigen, daß sie entlang einer Reihe steuert, wobei die Decodiereinrichtungen (146) Einrichtungen zur Ansteuerung des dritten Anzeigers einschliessen, wenn die Zählung in dem Zähler (144) gleich dem ersten Wert oder kleiner als dieser und gleich dem zweiten Wert oder größer als dieser ist.

14. Maschine nach einem der vorhergehenden Ansprüche,
dadurch gekennzeichnet, daß sie weiterhin folgende Teile umfaßt:
dritte und vierte Sender (24U,26U) zum Aussenden dritter bzw. vierter Energiestrahlen (40U,42U),
dritte und vierten Energiestrahl-Empfänger (34U,36U);
wobei die dritten und vierten Sender und Empfänger auf den ersten und zweiten Reihenteilern (10,12) oberhalb der ersten und zweiten Sender (24L,26L) und Empfänger (34L,36L) befestigt sind und die dritten und vierten Sender und Empfänger derart befestigt sind, daß der dritte Energiestrahl (40U) von dem dritten Empfänger (34U) empfangen wird und der vierte Energiestrahl (42U) von dem vierten Empfänger (36U) empfangen wird, wobei die dritten und vierten Energiestrahlen sich schneidende Pfade mit einem Schnittpunkt aufweisen, der auf einer allgemein vertikalen Linie (64) oberhalb des Punktes Liegt, an dem sich die ersten und zweiten Energiestrahlen (40L,42L) schneiden, wobei die Einrichtungen zur Erzeugung von Lenkungs-Steuersignalen Einrichtungen (66-80) einschließen, die auf die dritten und vierten Empfänger sowie auf die ersten und zweiten Empfänger ansprechen, um die Lenkungssteuersignale zu erzeugen.

15. Maschine nach Anspruch 14,
dadurch gekennzeichnet, daß die Einrichtungen zur Erzeugung von Lenkungs-Steuersignalen erste und zeite Koinzidenz-Detektoreinrichtungen (76,74) einschließen, die auf die ersten und dritten (34L,34U) bzw. die zweiten und vierten (36L,36U) Empfänger ansprechen, um die Lenkungs-Steuersignale zu erzeugen, wenn die ersten und dritten Energiestrahlen (40L,40U) gleichzeitig unterbrochen werden oder wenn die zweiten und vierten Energiestrahlen (42L,42U) gleichzeitig unterbrochen werden.

16. Maschine nach Anspruch 15,
dadurch gekennzeichnet, daß die Einrichtungen (78) zur Erzeugung von Lenkungs-Steuersignalen auf die ersten und zweiten Koinzidenz-Detektoreinrichtungen (76,74) ansprechende Einrichtungen zur Erzeugung eines ersten Lenkungs-Steuersignals, wenn die ersten und dritten Energiestrahlen (40L,40U) vor den zweiten und vierten Energiestrahlen (42L,42U) unterbrochen werden, und zur Erzeugung eines zweiten Lenkungs-Steuersignals einschließen, wenn die zweiten und vierten Energiestrahlen vor den ersten und zweiten Energiestrahlen unterbrochen werden.

17. Maschine nach Anspruch 16, dadurch gekennzeichnet, daß sie weiterhin eine Mittelwertschaltung (80) umfaßt, die auf die ersten und zweiten Lenkungs-Steuersignale anspricht, um einen Mittelwert der ersten und zweiten Lenkungs-Steuersignale zu bilden.

18. Maschine nach Anspruch 17,
dadurch gekennzeichnet, daß sie weiterhin auf die Mittelwertschaltung (80) ansprechende Anzeigeeinrichtungen umfaßt.

19. Maschine nach einem der Ansprüche 1 bis 13,
dadurch gekennzeichnet, daß sei weiterhin Stengelbreiten-Diskriminatoreinrichtungen (170,172) umfaßt, die zwischen jedem der Empfänger und den Einrichtungen zur Erzeugung der Lenkungs-Steuersignale eingeschaltet sind.

20. Maschine nach Anspruch 19,
dadurch gekennzeichnet, daß jede Stengelbreiten-Diskriminatoreinrichtung (170,172) einen monostabilen Multivibrator (176), der auf einen Empfänger zur Erzeugung eines Impulsausganges anspricht, auf einen Empfänger und den Impuls ansprechende Einrichtungen (178,180) zur Zuführung eines Signals an die Einrichtungen zur Erzeugung der Lenkungs-Steuersignale und Einrichtungen (174,184) zur Änderung der Dauer des Impulses in Abhängigkeit von der Fahrgeschwindigkeit der Erntemaschine einschließt.

21. Verfahren zur Lenkung einer Reihenfrucht-Erntemaschine,
dadurch gekennzeichnet, daß das Verfahren die folgenden Schritte umfaßt:
Anordnung erster und zweiter Infrarot-Energiestrahlempfänger (34,36), die Ausgangssignale erzeugen, und erster und zweiter Energiestrahl-Sender (24,26) auf der Erntemaschine, die derart auf der Erntemaschine angeordnet sind, daß die von den ersten und zweiten Sendern ausgesandten Infrarot-Energiestrahlen in Richtung auf den ersten bzw. zweiten Empfänger gerichtet sind und die ersten und zweiten Strahlen sich an einer Fruchtreihe der Reihenfrucht schneiden, wenn die Erntemaschine mit der Fruchtreihe ausgerichtet ist, und
Ansteuern (48) der Sender zur Erzeugung erster und zweiter Infrarot-Energiestrahlen (40,42) mit ausreichender Leistung derart, daß die Strahlen von den jeweiligen Empfängern nach dem Durchlaufen durch ein Blatt erfaßt werden können, jedoch gegenüber den jeweiligen Empfängern durch Fruchtstengel abgesperrt werden, wenn sich die Erntemaschine entlang der Fruchtreihe bewegt.

22. Verfahren nach Anspruch 21,
dadurch gekennzeichnet, daß es weiterhin den Schritt der Ermöglichung der Erzeugung von Ausgangssignalen durch die ersten und zweiten Infrarot-Energiestrahlempfänger (34,36) nur dann umfaßt, wenn die ersten bzw. zweiten Infrarot-Energiestrahlen (40,42) durch Fruchtstengel gesperrt sind.

23. Verfahren nach Anspruch 21 oder 22,
dadurch gekennzeichnet, daß es den Schritt der Analyse (54,58) der von den ersten und zweiten Infrarot-Energiestrahlempfängern (34,36) erzeugten Ausgangssignale und der Erzeugung von Lenkungs-Steuersignalen (60,62) zur Lenkung der Erntemaschine entlang der Fruchtreihe umfaßt.

24. Eine Reihenfrucht-Erntemaschine, die zur Bewegung entlang einer Reihe von Fruchtstengeln ausgebildet ist und ein Führungs- oder Lenkungssystem aufweist,
dadurch gekennzeichnet, daß das Lenkungssystem folgende Teile umfaßt:
erste und zweite Infrarot-Energiestrahlsender (24,26) zur Erzeugung erster und zweiter Infrarot-Energiestrahlen (40, 42), die eine Fruchtreihe überqueren und sich an einer Fruchtreihe schneiden, wenn die Erntemaschine mit der Fruchtreihe ausgerichtet ist,
erste und zweite Infrarot-Energiestrahlempfänger (34, 36) zur Erfassung des ersten bzw. zweiten Infrarot-Energiestrahls, und
Einrichtungen (48) zur Ansteuerung der ersten und zweiten Energiestrahl-Sender zur Erzeugung der ersten und zweiten Energiestrahlen mit ausreichender Intensität derart, daß die ersten und zweiten Infrarot-Energiestrahlempfänger die ersten und zweiten Infrarot-Energiestrahlen durch Blätter hindurch erfassen, nicht jedoch durch Fruchtstengel hindurch, wodurch die ersten und zweiten Infrarot-Energiestrahlempfänger Ausgangssignale nur dann erzeugen, wenn der erste bzw. zweite Infrarot-Energiestrahl durch Fruchtstengel blockiert ist.

25. Maschine nach Anspruch 24,
dadurch gekennzeichnet, daß sie weiterhin Einrichtungen (54,58) zur Analyse der von den ersten und zweiten Infrarot-Energiestrahlempfängern (34,36) erzeugten Ausgangssignale und zur Erzeugung von Lenkungssteuersignalen (60,62) zur Lenkung der Erntemaschine entlang der Fruchtreihe umfaßt.

26. Maschine nach Anspruch 25,
dadurch gekennzeichnet, daß die Analyseeinrichtungen einen Zeitvergleicher, dem die Ausgangssignale von den Empfängern (34,36) zugeführt werden, und mit dem Ausgang des Zeitvergleichers gekoppelte Mittelwerteinrichtungen umfassen.

27. Verfahren zur Lenkung einer Reihenfrucht-Erntemaschine, dadurch gekennzeichnet, daß das Verfahren folgende Schritte umfaßt:
Anordnen erster und zweiter Infrarot-Energiestrahlempfänger (34,36) und erster und zweiter Energiestrahlsender (24,26) auf der Erntemaschine, die derart auf der Erntemaschine angeordnet sind, daß die von den ersten und zweiten Sendern ausgestrahlten Infrarot-Energiestrahlen in Richtung auf den ersten bzw. zweiten Empfänger gerichtet sind und die ersten und zweiten Strahlen sich an einer Fruchtreihe der Reihenfrucht schneiden, wenn die Erntemaschine mit der Fruchtreihe ausgerichtet ist, und
Ansteuern (48) der Sender zur Erzeugung erster und zweiter Infrarot-Energiestrahlen (40,42) mit ausreichender Leistung derart, daß die Strahlen von den jeweiligen Empfängern nach dem Durchlaufen eines Blattes erfaßt werden können, jedoch gegenüber den jeweiligen Empfängern durch Fruchtstengel gesperrt werden, wenn sich die Erntemaschine entlang der Fruchtreihe bewegt.

## Revendications

1. Machine à récolter pour une culture en rangs, comportant au moins des premier et second séparateurs de rangs de culture (10, 12) adaptés pour se déplacer le long de côtés opposés d'un rang de tiges (18) de la culture, et équipée d'un système de guidage, caractérisée en ce que le système de guidage comporte :
des premier et second émetteurs (24, 26) respectivement destinés à émettre des premier et second faisceaux d'énergie (40, 42) ;
des premier et second récepteurs de faisceaux d'énergie (34, 36) ;
les émetteurs et les récepteurs étant montés sur les premier et second séparateurs de rangs (10, 12) de telle manière que le premier faisceau d'énergie (40) est reçu par le premier récepteur (34), tandis que le second faisceau d'énergie (42) est reçu par le second récepteur (36), et que les premier et second faisceaux d'énergie (40, 42) ont des trajectoires d'intersection qui coupent un rang de culture de sorte qu'ils sont interrompus par les tiges (18), la zone d'intersection des faisceaux d'énergie définissant la position latérale de la machine à récolter par rapport au rang de culture ; et
des moyens (50-62) sensibles aux premier et second récepteurs (34, 36) pour produire des signaux de commande de direction indiquant la direction dans laquelle la machine à récolter doit être manoeuvrée afin d'être alignée le long du rang de culture.

2. Machine telle que définie dans la revendication 1, caractérisée en ce que les moyens destinés à produire des signaux de commande de direction comprennent des moyens (74, 76) destinés à déterminer l'ordre selon lequel les faisceaux d'énergie (40, 42) sont interrompus par une tige (18) du rang de culture.

3. Machine telle que définie dans la revendication 1 ou 2, caractérisée en ce que les premier et second faisceaux d'énergie se croisent au niveau d'un point situé, d'une manière générale, à mi-distance entre les séparateurs de rangs (10, 12).

4. Machine telle que définie dans l'une quelconque des revendications précédentes, caractérisée en ce que les faisceaux d'énergie (40, 42) sont des faisceaux d'énergie acoustique.

5. Machine telle que définie dans l'une quelconque des revendications 1 à 3, caractérisée en ce que les faisceaux d'énergie (40, 42) sont des faisceaux infrarouges.

6. Machine telle que définie dans l'une quelconque des revendications 1 à 3, caractérisée en ce que les faisceaux d'énergie (40, 42) sont des faisceaux de lumière visible.

7. Machine telle que définie dans l'une quelconque des revendications précédentes, caractérisée en ce que des moyens modulateurs sont aptes à agir pour appliquer un signal modulé à chacun des émetteurs (24, 26) pour produire des faisceaux d'énergie modulés (40, 42).

8. Machine telle que définie dans la revendication 2 et dans l'une quelconque des revendications 3 à 7 lorsqu'elles sont dépendantes de celle-ci, caractérisée en ce que les moyens destinés à déterminer l'ordre suivant lequel lesdits faisceaux d'énergie sont interrompus, comportent :
une première bascule (100) sensible au premier récepteur de faisceau d'énergie (34) pour stocker une indication lorsque le premier faisceau d'énergie (40) est interrompu par une tige donnée ;
une seconde bascule (102) sensible au second récepteur de faisceau d'énergie (36) pour stocker une indication lorsque le second faisceau d'énergie (42) est interrompu par ladite tige donnée ;
des moyens (108) sensibles auxdites première et seconde bascules pour déclencher et cadencer un intervalle de zone morte ;
des troisième et quatrième bascules (104, 106) respectivement reliées aux première et seconde bascules (100, 102), et auxdits moyens (108) destinés à déclencher et à cadencer un intervalle de zone morte, les moyens (108) destinés à déclencher et à cadencer un intervalle de zone morte produisant un signal de sortie qui pointe les indications stockées dans les première et seconde bascules en entrée dans les troisième et quatrième bascules, respectivement, à la fin de l'intervalle de zone morte.

9. Machine telle que définie dans la revendication 8, caractérisée en ce que les moyens destinés à produire des signaux de commande de direction comportent :
un compteur-décompteur (144) ; et
des moyens formant circuit logique qui comprennent des premiers moyens (122) sensibles aux troisième et quatrième bascules (104, 106) pour incrémenter le compteur-décompteur (144) lorsque la première bascule (100), mais pas la seconde bascule (102), est mise à un avant la fin de l'intervalle de zone morte, les moyens formant circuit logique comprenant des seconds moyens (120) sensibles aux troisième et quatrième bascules (102, 104) pour décrémenter le compteur-décompteur lorsque la seconde bascule (102), mais pas la première bascule (100), est mise à un avant la fin de l'intervalle de zone morte.

10. Machine telle que définie dans la revendication 9, caractérisée en ce que les moyens destinés à produire des signaux de commande de direction comprennent des moyens décodeurs (146) destinés à produire un premier signal de commande de direction lorsque le compteur-décompteur (144) contient un comptage supérieur à une première valeur, et un second signal de commande de direction, lorsque le compteur-décompteur contient un comptage inférieur à une seconde valeur.

11. Machine telle que définie dans la revendication 10, caractérisée en ce qu'elle comporte, en outre, des moyens destinés à remettre le compteur-décompteur (144) à une valeur intermédiaire inférieure à ladite première valeur et supérieure à ladite seconde valeur, les moyens formant circuit logique comprenant des troisièmes moyens (132, 136, 140) sensibles aux troisième et quatrième bascules (104, 106) pour incrémenter le compteur-décompteur (144) lorsque celui-ci contient un comptage inférieur à ladite valeur intermédiaire et que les première et seconde bascules (100, 102) sont toutes deux mises à un pendant l'intervalle de zone morte, et des quatrièmes moyens (132, 138, 142) sensibles aux troisième et quatrième bascules (104, 106) pour décrémenter le compteur-décompteur lorsque celui-ci contient un comptage supérieur à ladite valeur intermédiaire et que les première et seconde bascules sont toutes deux mises à un pendant l'intervalle de zone morte.

12. Machine telle que définie dans la revendication 11, caractérisée en ce qu'elle comporte, en outre, des premier et second indicateurs respectivement sensibles auxdits premier et second signaux de commande de direction.

13. Machine telle que définie dans la revendication 12, caractérisée en ce qu'elle comporte, en outre, un troisième indicateur (160) destiné à indiquer à un opérateur qu'il manoeuvre le long d'un rang, les moyens décodeurs (146) comprenant des moyens destinés à exciter le troisième indicateur lorsque le comptage contenu dans le compteur-décompteur (144) est égal, ou inférieur, à ladite première valeur et égal, ou supérieur, à ladite seconde valeur.

14. Machine telle que définie dans l'une quelconque des revendications précédentes, caractérisée en ce qu'elle comporte, en outre :
des troisième et quatrième émetteurs (24U, 26U) respectivement destinés à émettre des troisième et quatrième faisceaux d'énergie (40U, 42U) ;
des troisième et quatrième récepteurs de faisceaux d'énergie (34U, 36U) ;
les troisième et quatrième émetteurs et récepteurs étant montés sur les premier et second séparateurs de rangs (10, 12) au-dessus des premiers et seconds émetteurs (24L, 26L) et récepteurs (34L, 36L), les troisièmes et quatrièmes émetteurs et récepteurs étant montés de telle manière que le troisième faisceau d'énergie (40U) est reçu par le troisième récepteur (34U), et le quatrième faisceau d'énergie (42U) est reçu par le quatrième récepteur (36U), les troisième et quatrième faisceaux d'énergie ayant des trajectoires d'intersection dont le point d'intersection se trouve sur une ligne sensiblement verticale (64) au-dessus du point au niveau duquel les premier et second faisceaux d'énergie (40L, 42L) se coupent ;
les moyens destinés à produire des signaux de commande de direction comprenant des moyens (66-80) sensibles aux troisième et quatrième récepteurs ainsi qu'aux premier et second récepteurs pour produire les signaux de commande de direction.

15. Machine telle que définie dans la revendication 14, caractérisée en ce que les moyens destinés à produire des signaux de commande de direction comprennent des premier et second moyens détecteurs de coïncidence (76, 74) sensibles aux premier et troisième récepteurs (34L, 34U) et aux second et quatrième récepteurs (36L, 36U), respectivement, pour produire les signaux de commande de direction lorsque les premier et troisième faisceaux d'énergie (40L, 40U) sont interrompus simultanément, ou lorsque les second et quatrième faisceaux d'énergie (42L, 42U) sont interrompus simultanément.

16. Machine telle que définie dans la revendication 15, caractérisée en ce que les moyens (78) destinés à produire des signaux de commande de direction comprennent des moyens sensibles aux premier et second moyens détecteurs de coïncidence (76, 74) pour produire un premier signal de commande de direction lorsque les premier et troisième faisceaux d'énergie (40L, 40U) sont interrompus avant les second et quatrième faisceaux d'énergie (42L, 42U) et pour produire un second signal de commande de direction, lorsque les second et quatrième faisceaux d'énergie sont interrompus avant les premier et second faisceaux d'énergie.

17. Machine telle que définie dans la revendication 16, caractérisée en ce qu'elle comporte, en outre, un circuit calculateur de moyenne (80) sensible aux premier et second signaux de commande de direction pour calculer la moyenne des premier et second signaux de commande de direction.

18. Machine telle que définie dans la revendication 17, caractérisée en ce qu'elle comporte, en outre, des moyens indicateurs sensibles au circuit calculateur de moyenne (80).

19. Machine telle que définie dans l'une quelconque des revendications 1 à 13, caractérisée en ce qu'elle comporte, en outre, des moyens discriminateurs de largeur de tige (170, 172) montés entre chacun des récepteurs et lesdits moyens destinés à produire des signaux de commande de direction.

20. Machine telle que définie dans la revendication 19, caractérisée en ce que chacun des moyens discriminateurs de largeur de tige (170, 172) comprend un multivibrateur monostable (176) sensible à un récepteur pour produire une impulsion de sortie, des moyens formant circuit logique (178, 180) sensibles à un récepteur et à l'impulsion pour appliquer un signal aux moyens destinés à produire des signaux de commande de direction ; et des moyens (174, 184) destinés à modifier la durée de l'impulsion en fonction de la vitesse au sol de la machine à récolter.

21. Méthode de guidage d'une machine à récolter pour une culture en rangs, caractérisée en ce que la méthode consiste à :
disposer des premier et second récepteurs de faisceaux d'énergie infrarouge (34, 36) produisant des signaux de sortie, et des premier et second émetteurs de faisceaux d'énergie (24, 26) sur la machine à récolter en les positionnant sur celle-ci de telle manière que des faisceaux d'énergie infrarouge émis par les premier et second émetteurs sont respectivement dirigés vers les premier et second récepteurs, et que les premier et second faisceaux se coupent au niveau d'un rang de la culture en rangs lorsque la machine à récolter est alignée avec le rang de culture ; et
exciter (48) les émetteurs pour générer des premier et second faisceaux d'énergie infrarouge (40, 42) ayant une intensité suffisante pour pouvoir être détectés par les récepteurs respectifs après avoir traversé une feuille, mais pour être bloqués vis-à-vis des récepteurs respectifs par des tiges de culture, au fur et à mesure que la machine à récolter se déplace le long du rang de culture.

22. Méthode telle que définie dans la revendication 21, caractérisée en ce qu'elle comporte, en outre, l'étape qui consiste à permettre aux premier et second récepteurs de faisceaux d'énergie infrarouge (34, 36) de produire des signaux de sortie uniquement lorsque les premier et second faisceaux d'énergie infrarouge (40, 42) sont respectivement bloqués par des tiges de culture.

23. Méthode telle que définie dans la revendication 21 ou 22, caractérisée en ce qu'elle comporte l'étape qui consiste à analyser (54, 58) les signaux de sortie produits par les premier et second récepteurs de faisceaux d'énergie infrarouge (34, 36) et à produire des signaux de commande de direction (60, 62) en vue de guider la machine à récolter le long du rang de culture.

24. Machine à récolter pour une culture en rangs, adaptée pour se déplacer le long d'un rang de tiges de la culture et équipée d'un système de guidage, caractérisée en ce que le système de guidage comporte :
des premier et second émetteurs de faisceaux d'énergie infrarouge (24, 26) destinés à produire des premier et second faisceaux d'énergie infrarouge (40, 42) qui croisent un rang de la culture et se coupent au niveau de celui-ci lorsque la machine à récolter est alignée avec le rang de la culture ;
des premier et second récepteurs de faisceaux d'énergie infrarouge (34, 36) respectivement destinés à détecter les premier et second faisceaux d'énergie infrarouge ; et
des moyens (48) destinés à exciter les premier et second émetteurs de faisceaux d'énergie pour produire les premier et second faisceaux d'énergie avec une intensité suffisante pour que les premier et second récepteurs de faisceaux d'énergie infrarouge détectent les premier et second faisceaux d'énergie infrarouge à travers des feuilles mais pas à travers des tiges de la culture, pour qu'ainsi les premier et second récepteurs de faisceaux d'énergie infrarouge produisent des signaux de sortie uniquement lorsque les premier et second faisceaux d'énergie infrarouge sont respectivement bloqués par les tiges de la culture.

25. Machine telle que définie dans la revendication 24, caractérisée en ce qu'elle comporte, en outre, des moyens (54, 58) destinés à analyser les signaux de sortie produits par les premier et second récepteurs de faisceaux d'énergie infrarouge (34, 36) et à produire des signaux de commande de direction (60, 62) en vue de guider la machine à récolter le long du rang de la culture.

26. Machine telle que définie dans la revendication 25, caractérisée en ce que les moyens d'analyse comportent un comparateur de temps auquel les signaux de sortie provenant des récepteurs (34, 36) sont appliqués, et des moyens calculateurs de moyenne accouplés à la sortie du comparateur de temps.

27. Méthode de guidage d'une machine à récolter pour une culture en rangs, caractérisée en ce que la méthode consiste à :
disposer des premier et second récepteurs de faisceaux d'énergie infrarouge (34, 36) et des premier et second émetteurs de faisceaux d'énergie (24, 26) sur la machine à récolter en les positionnant sur celle-ci de telle manière que des faisceaux d'énergie infrarouge émis par les premier et second émetteurs sont respectivement dirigés vers les premier et second récepteurs et que ces premier et second faisceaux se coupent au niveau d'un rang de la culture en rangs, lorsque la machine à récolter est alignée avec le rang de la culture ;
exciter (48) les émetteurs pour qu'ils génèrent des premier et second faisceaux d'énergie infrarouge (40, 42) ayant une intensité suffisante pour pouvoir être détectés par les récepteurs respectifs après avoir traversé une feuille, mais pour être bloqués vis-à-vis des récepteurs respectifs par des tiges de la culture au fur et à mesure que la machine à récolter se déplace le long du rang de la culture.
